Europäisches Patentamt

European Patent Office

Office européen des brevets

(19)

(11) Veröffentlichungsnummer: **0 020 947**
**B1**

(12) **EUROPÄISCHE PATENTSCHRIFT**

(45) Veröffentlichungstag der Patentschrift:
06.07.83

(51) Int. Cl.³: **B 41 J 3/46**

(21) Anmeldenummer: **80102397.9**

(22) Anmeldetag: **02.05.80**

(54) **Textbearbeitungsmaschine mit einer Anzeigeeinrichtung.**

(30) Priorität: **02.07.79 DE 2926669**

(43) Veröffentlichungstag der Anmeldung:
**07.01.81 Patentblatt 81/1**

(45) Bekanntmachung des Hinweises auf die Patenterteilung:
**06.07.83 Patentblatt 83/27**

(84) Benannte Vertragsstaaten:
**CH DE FR GB IT LI**

(56) Entgegenhaltungen:
**DE-A-2 621 146**
**DE-A-2 848 974**
**FR-A-2 276 938**

(73) Patentinhaber: **OLYMPIA WERKE AG,**
**Postfach 960 Olympiastrasse, D-2940 Wilhelmshaven (DE)**

(72) Erfinder: **Fessel, Rudolf, Neisser Strasse 3, D-2942 Jever (DE)**

Textbearbeitungsmaschine mit einer Anzeigeeinrichtung

Die Erfindung betrifft eine Textbearbeitungsmaschine der im Oberbegriff des Patentanspruchs 1 angegebenen Art.

Textbearbeitungsmaschinen sind vielfach mit einer Anzeigeeinrichtung versehen, auf der die Zeichen eines Textzeilenabschnittes dargestellt werden können (z. B. 12stelliges Zeilendisplay). Mittels einer Tastatur der Maschine eingegebene Zeichen werden in einem Textspeicher abgelegt und zugleich auf der Anzeigeeinrichtung dargestellt, ohne daß eine Tätigkeit des Schreibwerkes und ein Ausschreiben der eingegebenen Zeichen erfolgt. Dadurch ist eine Kontrolle des eingegebenen Textes und gegebenenfalls eine Korrektur durch Neueingabe möglich. Ein Ausschreiben der eingegebenen Zeichen erfolgt nach Betätigung einer besonderen Taste, automatisch am Zeilenende oder beim Auftreten anderer besonderer Kriterien, z. B. bei Betätigung einer Leertaste nach einem eingegebenen Wort.

Ein solcher verzögerter Ausschreibevorgang ist für normale Texteingabe akzeptabel, er führt jedoch beim Beschriften von Formularen und ähnlichen Vordrucken für den Bediener zu erheblichen Schwierigkeiten, weil ihm die Anzeigeeinrichtung keine Kontrollmöglichkeit über die jeweilige Stelle auf dem Aufzeichnungsträger bietet, an der die in den Speicher eingegebenen Zeichen zur Ausschreibung gelangen werden. Auch die Feststellung, ob und wann der Raum einer Formularspalte aufgebraucht ist, ließe sich allenfalls durch Zählen der Zeichen treffen. Der bekannte Stand der Technik hat deshalb eine Möglichkeit vorgesehen, von dem beschriebenen verzögerten Ausschreiben auf ein direktes Ausschreiben umzuschalten, so daß eingegebenen Zeichen sofort auf dem Aufzeichnungsträger ausgeschrieben werden. Diese Maßnahme erlaubt es nunmehr zwar, Formulare ohne Schwierigkeiten zu beschriften, die mit der Anzeigeeinrichtung und dem verzögerten Ausschreiben gebotene Korrekturfähigkeit kann dadurch aber nicht mehr ausnutzt werden.

Der Erfindung liegt die Aufgabe zugrunde, dem Bediener einer Textbearbeitungsmaschine der eingangs genannten Art eine vor dem Ausschreiben korrigierbare Zeicheneingabe für das Beschriften von Formularen und ähnlichen Vordrucken zu ermöglichen.

Diese Aufgabe wird erfindungsgemäß durch die im Patentanspruch 1 angegebenen Merkmale gelöst.

Die mit der Erfindung erzielten Vorteile bestehen insbesondere darin, daß eine Darstellung eingegebener Zeichen auf der Anzeigeeinrichtung mit verzögertem Ausschreiben auf einem Aufzeichnungsträger erfolgt, der Bediener aber dennoch jederzeit darüber informiert ist, an welcher Stelle auf dem Aufzeichnungsträger ein gerade eingegebenes Zeichen ausgeschrieben werden wird. Es besteht dadurch die Möglichkeit der optischen Kontrolle und Korrektur eingegebener Zeichen vor dem Ausschreiben. Diese Vorteile werden ohne nennenswerten technischen Mehraufwand erreicht.

Ein Ausführungsbeispiel der Erfindung ist in den Zeichnungen dargestellt und wird nachfolgend näher erläutert. Es zeigt

Fig. 1 eine Ansicht eines Textbearbeitungsgerätes und

Fig. 2 ein Flußdiagramm.

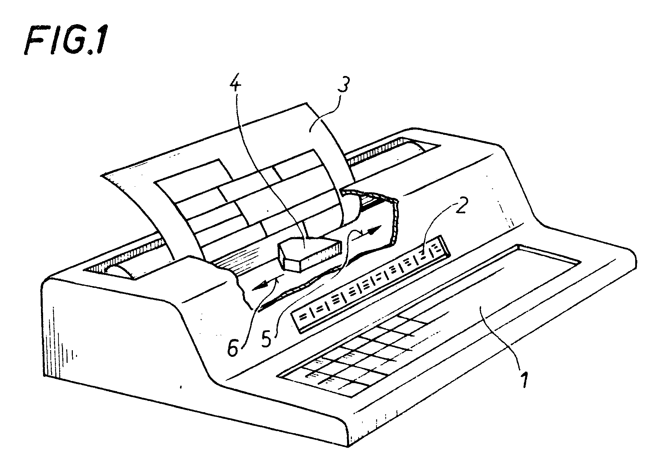

In Fig. 1 ist als Textbearbeitungsmaschine ein sogenannter Textautomat dargestellt, der neben einem üblichen Tastenfeld 1 eine alpha-numerische Anzeigeeinrichtung 2 — auch Display genannt — aufweist, auf der in zehn Spalten maximal zehn Zeichen darstellbar sind. In die Maschine ist ein Formularvordruck 3 eingespannt, auf dem Texte in verschiedenen umrandeten Feldern eingetragen werden sollen. Vor dem Formularvordruck 3 ist ein Schreibwerkswagen 4 in entgegengesetzter Richtung schrittweise verschiebbar angeordnet, dessen Schreibwerk beliebiger Art sein kann (z. B. Nadeldrucker, Typenraddrucker, Flüssigkeitsschreibwerk). Die Verschieberichtung ist durch Pfeile 5, 6 dargestellt. Der Aufzeichnungsträger (Formularvordruck 3) ist durch Betätigung einer zugeordneten Taste in bekannter Weise senkrecht zur Verschieberichtung des Schreibwerkes schrittweise bewegbar.

Wird mittels des Tastenfeldes 1 ein Text eingegeben, so werden die den betätigten Tasten zugeordneten Codes nacheinander in einem Textspeicher unter Zuordnung zu den jeweiligen Positionen auf dem Formularvordruck 3, an denen später das Ausschreiben erfolgen soll, abgelegt. Jedes eingegebene Zeichen gelangt nicht nur in den Textspeicher, sondern wird auch auf der Anzeigeeinrichtung 2 dargestellt, wobei das erste eingegebene Zeichen in der äußerst rechten Stelle abgebildet und durch jedes weitere Zeichen um eine Stelle nach links verschoben wird, so daß ein eingegebener Text von rechts nach links fortschreitend sichtbar wird. Sobald die zehn Stellen der Anzeigeeinrichtung 2 belegt sind, wird auf der linken Seite der Anzeigeeinrichtung 2 mit jedem weiteren eingegebenen Zeichen ein Zeichen durch die Linksverschiebung des dargestellten Textabschnittes unsichtbar, so daß immer die zuletzt eingegebenen zehn Zeichen sichtbar sind.

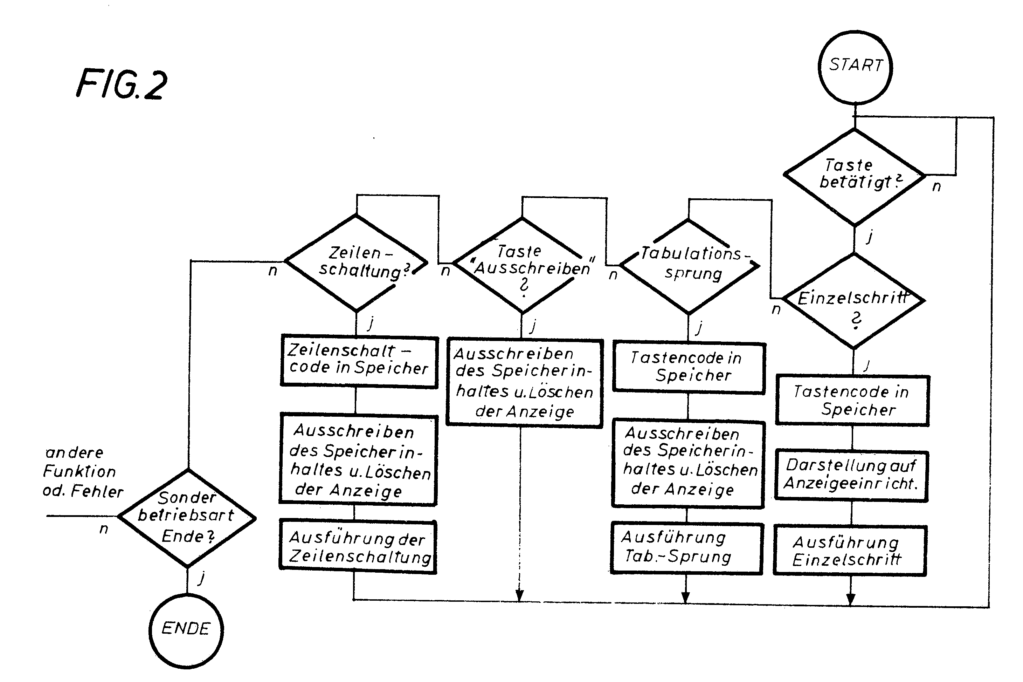

Zusätzlich zu dieser Betriebsart kann zum Ausfüllen von Formularvordrucken 3 erfindungsgemäß eine besondere Betriebsart durch Tastenbetätigung eingestellt werden, die nachfolgend anhand des sehr vereinfachten Flußdiagrammes der Fig. 2 beschrieben wird. Betätigung der Taste für die besondere Betriebsart bewirkt den Start eines speziellen Programmes, durch das zunächst abgefragt wird, ob eine der Tasten des Tastenfeldes 1 betätigt worden ist.

Diese Abfrage erfolgt so lange, bis eine Betätigung bejaht wird. Es schließt sich eine Abfrage an, ob mit der Tastenbetätigung die Ausführung eines Einzelschrittes beim Ausschreiben des Zeichens verbunden ist. Diese Frage wird normalerweise bei Eingabe eines jeden alpha-numerischen Zeichens oder Leerschrittes bejaht werden. Es erfolgt Einspeicherung des der betätigten Taste zugeordneten Tastencodes in den Textspeicher unter Zuordnung der Positions- und Steuerangaben zur Einstellung des Schreibwerkes 4 gegenüber dem Formularvordruck 3 bei späterem Ausschreiben und Darstellung des entsprechenden Zeichens auf der Anzeigeeinrichtung 2.

Gleichzeitig führt das Schreibwerk den zugehörigen Einzelschritt aus, ohne daß jedoch das Zeichen abgedruckt würde. Die Bedienung kann nun durch die Stellung des Schreibwerkes 4 erkennen, an welcher Stelle des Formularvordruckes 3 das auf der Anzeigeeinrichtung 2 abgebildete Zeichen bei dem später folgenden Ausschreiben zu stehen kommen wird.

Ist auf diese Weise ein Feld des Formularvordruckes 3 beschriftet worden, so wird möglicherweise durch entsprechende Tastenbetätigung ein Sprung des Schreibwerkes an eine andere Stelle (Tabulation) befohlen. Das Programm erkennt in seiner Abfrageroutine, daß kein Einzelschritt sondern ein Tabulationssprung durch Tastenbetätigung eingegeben worden ist und veranlaßt zunächst, daß der entsprechende Tastencode zwischengespeichert wird. Es veranlaßt weiterhin, daß der im Speicher stehende Text vom Schreibwerk 4 ausgeschrieben wird, bevor der befohlene Tabulationssprung ausgeführt wird. Zu diesem Zweck wird das Schreibwerk 4 erneut auf alle Positionen eingestellt, wobei jedoch diesmal die für die jeweilige Stelle gespeicherten Schriftzeichen zum Abdruck gelangen. Die Positionierung des Schreibwerkes 4 kann dabei aus dessen letzter Stellung rückwärtsschreitend erfolgen oder nach Rücklauf des Schreibwerkes schrittweise in Vorwärtsrichtung. Gleichzeitig mit dem Ausschreiben des Textes wird auch die Anzeige gelöscht. Erst wenn der beschriebene Vorgang abgeschlossen ist, wird der eingegebene Tabulationssprung ausgeführt.

Da unabhängig von der Tasteneingabe arbeitende Schreibwerke ein sehr schnelles Ausdrucken erlauben, wird die Wartezeit bis zur Einnahme der durch den Tabulationsbefehl angegebenen neuen Position nicht ungebührlich verzögert, zumal auch während des Ausschreibevorganges die Eingabe neuer Zeichen in den Textspeicher und deren Darstellung auf der Anzeigeeinrichtung 2 ungehindert weitergehen kann und nur die Positionsanzeige durch das Schreibwerk 4 verzögert erfolgt.

Es ist auch möglich, eine spezielle Befehlstaste »Ausschreiben« vorzusehen, so daß der Bediener durch deren Betätigung selbst wählen kann, wann das Ausschreiben erfolgen soll, so daß er eine ihn störende Wartezeit vermeiden kann. In diesem Falle erkennt das Programm die Betätigung der Taste »Ausschreiben« und veranlaßt, daß der Speicherinhalt auf den Formularvordruck gebracht und die Anzeige gelöscht wird.

Ist das Ende einer Zeile erreicht, so wird entweder — in an sich bekannter Weise durch Eingabe eines Leerschrittes, eines Interpunktions- oder eines Trennzeichens in einer Randzone — automatisch eine Zeilenschaltung eingeleitet, oder deren gewollte Auslösung herbeigeführt. Das Programm veranlaßt — wie beim Befehl »Tabulation« — daß zunächst der Zeilenschalt-Code im Speicher abgelegt wird und die noch im Textspeicher enthaltenen Zeichen ausgeschrieben werden, wobei wiederum die Anzeige gelöscht wird. Danach erst erfolgt die befohlene Zeilenschaltung und Rückführung des Schreibwerkes in eine Anfangsposition.

Die Betätigung einer Taste »Ende der besonderen Betriebsart« beendet schließlich das Programm und läßt die Maschine in ihre normale Betriebsart zurückkehren.

Neben den beschriebenen, durch Tastenbetätigung ausgelösten Funktionen weist eine Textbearbeitungsmaschine selbstverständlich noch eine Reihe weiterer Funktionen auf, die mit der erfindungsgemäßen Einrichtung und deren Ablaufsteuerung in Wechselbeziehung stehen. Deren nähere Erläuterung ist aber zum Verständnis der Erfindung nicht erforderlich.

Obwohl in dem gewählten Ausführungsbeispiel eine besondere zusätzliche Betriebsart für das nichtdruckende Mitführen des Schreibwerkswagens 4 vorgesehen ist, ist es auch denkbar, daß die Maschine ohne diese besondere Betriebsart arbeitet.

## Patentansprüche

1. Textbearbeitungsmaschine, insbesondere Schreib-, Buchungs- oder Fakturiermaschine, bei der mittels einer Tastatur eingegebene Zeichen auf einer Anzeigeeinrichtung (2) dargestellt und in einem Textspeicher abgelegt werden und zu einem späteren Zeitpunkt ein Ausschreiben der Zeichen aus dem Textspeicher erfolgt, dadurch gekennzeichnet, daß bei Betätigung einer Taste gleichzeitig eine zur Tasteneingabe zugehörige Einstellbewegung des Schreibwerkes gegenüber dem Aufzeichnungsträger ausgeführt wird, ein Ausschreiben der Zeichen aber erst auf ein gesondertes Befehlssignal hin unter erneuter speichergesteuerter Ausführung der Einstellbewegung erfolgt.

2. Textbearbeitungsmaschine nach Anspruch 1, dadurch gekennzeichnet, daß das Ausschreiben der Zeichen aus dem Textspeicher automatisch nach Betätigung einer speziellen Funktions- und/oder Sondertaste erfolgt.

3. Textbearbeitungsmaschine nach Anspruch 2, dadurch gekennzeichnet, daß das Ausschreiben der Zeichen aus dem Textspeicher automatisch nach Betätigung einer einen Tabulationssprung auslösenden Taste vor der Ausführung des Tabulationssprunges erfolgt.

4. Textbearbeitungsmaschine nach Anspruch 1, 2 oder 3, dadurch gekennzeichnet, daß das Ausschreiben der Zeichen aus dem Textspeicher automatisch nach Auslösung einer Zeilenschaltung vor deren Ausführung erfolgt.

5. Textbearbeitungsmaschine nach einem der vorhergehenden Ansprüche, dadurch gekennzeichnet, daß das Ausschreiben der Zeichen aus dem Textspeicher von rechts nach links erfolgt.

6. Textbearbeitungsmaschine nach einem der vorhergehenden Ansprüche, dadurch gekennzeichnet, daß die Maschine durch ein Eingabemittel in die besondere Betriebsart gemäß Anspruch 1 versetzbar ist.

## Claims

1. A text handling machine, in particular a typewriter, an accounting machine or a billing machine, in which symbols entered via a keyboard are represented on a display (2), are stored in a text store and at a later time the symbols are printed out from the text store, characterised in that simultaneously upon operation of a key there occurs a setting movement of the print mechanism, corresponding to the key input, relative to the print carrier, but that printing of the symbols only occurs upon a separate instruction signal using a repeated store-controlled execution of the setting movement.

2. A text handling machine according to claim 1, characterised in that printing of the symbols from the store occurs automatically upon operation of a special function key and/or a separate key.

3. A text handling machine according to claim 2, characterised in that printing of the symbols from the store occurs automatically upon operation of a key producing a tabulation movement before the execution of that movement.

4. A text handling machine according to claim 1, 2 or 3, characterised in that printing of the symbols from the store occurs automatically after initiation of a line feed but before its execution.

5. A text handling machine according to one of the preceding claims, characterised in that printing of the symbols from the store is carried out from right to left.

6. A text handling machine according to one of the preceding claims, characterised in that the machine can be set to operate in the particular manner according to claim 1 by input means.

## Revendications

1. Machine de traitement de textes, en particulier machine d'écriture, de comptabilité ou de facturation, dans laquelle des signes introduits au moyen d'un clavier sont représentés sur un dispositif d'affichage (2) et déposés dans une mémoire de textes, une impression de ces signes extraits de ladite mémoire de textes se produisant à un instant ultérieur, machine caractérisée par le fait que, concomitamment à l'actionnement d'une touche, le mécanisme d'écriture effectue, par rapport au support d'inscriptions, un déplacement de réglage associé à l'introduction par touche, mais une impression des signes ne se produit que sur un signal particulier de commande avec un nouveau déplacement de réglage commandé par la mémoire.

2. Machine de traitement de textes selon la revendication 1, caractérisée par le fait que l'impression des signes extraits de la mémoire de textes se produit automatiquement après l'actionnement d'une touche spéciale de fonction et/ou d'une touche particulière.

3. Machine de traitement de textes selon la revendication 2, caractérisée par le fait que l'impression des signes extraits de la mémoire de texte se produit automatiquement après l'actionnement d'une touche déclenchant un saut de tabulation, avant que ce saut de tabulation soit exécuté.

4. Machine de traitement de textes selon la revendication 1, 2 ou 3, caractérisée par le fait que l'impression des signes extraits de la mémoire de textes se produit automatiquement après le déclenchement d'un changement de ligne, avant que ce dernier soit exécuté.

5. Machine de traitement de textes selon l'une des revendications précédentes, caractérisée par le fait que l'impression des signes extraits de la mémoire de textes se produit de droite à gauche.

6. Machine de traitement de textes selon l'une des revendications précédentes, caractérisée par le fait que cette machine peut passer, par l'intermédiaire d'un moyen d'entrée de données, au mode opératoire particulier selon la revendication 1.

FIG.2

START

Taste
betätigt?  n

j

Einzelschritt
?  n

j

Tastencode in
Speicher

Darstellung auf
Anzeigeeinricht.

Ausführung
Einzelschritt

Tabulationssprung  n

j

Tastencode in
Speicher

Ausschreiben
des Speicherinhaltes u. Löschen
der Anzeige

Ausführung
Tab.-Sprung

Taste
"Ausschreiben"
?  n

j

Ausschreiben
des Speicherinhaltes u. Löschen
der Anzeige

Zeilenschaltung?  n

j

Zeilenschalt-
code in Speicher

Ausschreiben
des Speicherinhaltes u. Löschen
der Anzeige

Ausführung der
Zeilenschaltung

andere
Funktion
od. Fehler

Sonder
betriebsart
Ende?  n

j

ENDE

0 020 947